(19) **Europäisches Patentamt / European Patent Office / Office européen des brevets**

(11) **EP 2 725 497 A1**

(12) **EUROPEAN PATENT APPLICATION**

(43) Date of publication:
30.04.2014 Bulletin 2014/18

(51) Int Cl.:
***G06F 13/16*** (2006.01)

(21) Application number: 13187866.2

(22) Date of filing: 09.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 23.10.2012 US 201261717553 P
03.09.2013 US 201314017301

(71) Applicant: **Analog Devices, Inc.**
**Norwood, MA 02062-9106 (US)**

(72) Inventors:
• **Redford, John**
**Arlington, MA 02476 (US)**
• **Lerner, Boris**
**Sharon, MA 02067 (US)**

(74) Representative: **Wardle, Callum Tarn et al**
**Withers & Rogers LLP**
**4 More London Riverside**
**London**
**SE1 2AU (GB)**

(54) **Memory arbitration circuit and method**

(57) According to one example embodiment, an arbiter is disclosed to mediate memory access requests from a plurality of processing elements. If two or more processing elements try to access data within the same word in a single memory bank, the arbiter permits some or all of the processing elements to access the word. If two or more processing elements try to access different data words in the same memory bank, the lowest-ordered processing element is granted access and the others are stalled.

FIG. 6

EP 2 725 497 A1

**Description**

CROSS-REFERENCE TO RELATED APPLICATIONS

This application claims priority to U.S. Provisional Application 61/717,553, filed October 23, 2012, entitled "Memory Architecture for Vector Processors," which is incorporated by reference in its entirety.

FIELD OF THE DISCLOSURE

The present disclosure relates generally to parallel and vector processors, and more particularly to a memory architecture for vector processing.

BACKGROUND

Parallel processing is often implemented by a processor to optimize processing applications, for example, by a digital signal processor to optimize digital signal processing applications. A processor can operate as a single instruction, multiple data (SIMD), or data parallel, processor to achieve parallel processing. In SIMD operations, a single instruction is sent to a number of processing elements of the processor, where each processing element can perform a same operation on different data.

In vector processors, many different processing elements (PEs) can read or write memory locations during a single cycle. A common way to build such a memory is called banking, where a set of single-port RAM banks are connected to the PEs in a way such that any PE can access any RAM bank. Each RAM bank handles one interleaved set of addresses, sometimes separated into data words. For example, in a processor with a 32-bit (4-byte) word length and four RAM banks, RAM 0 may handle byte addresses 0 - 3, RAM 1 may handle byte addresses 4 - 7, RAM 2 may handle byte addresses 8 - 11, RAM 3 may handle byte addresses 12 -15, RAM 0 may handle byte addresses 16 -19, and so on.

BRIEF DESCRIPTION OF THE DRAWINGS

The present disclosure is best understood from the following detailed description when read with the accompanying FIGURES. It is emphasized that, in accordance with the standard practice in the industry, various features are not drawn to scale and are used for illustration purposes only. In fact, the dimensions of the various features may be arbitrarily increased or reduced for clarity of discussion.

FIG. 1 is a block diagram of a digital signal processor system according to various aspects of the present disclosure.

FIG. 2 is a block diagram disclosing with more particularity memory operations according to various aspects of the present disclosure.

FIG. 3 is a block diagram of an example memory access operation according to various aspects of the present disclosure.

FIG. 4 is a block diagram of an example memory access operation according to various aspects of the present disclosure.

FIG. 5 is a block diagram of an example memory access operation according to various aspects of the present disclosure.

FIG. 6 is a block diagram of an example memory access operation according to various aspects of the present disclosure.

OVERVIEW

In one aspect , there is disclosed a circuit comprising a plurality of processing elements; a memory comprising a plurality of banks; a crossbar communicatively coupled to the processing elements and to the memory, and to multiplex communication between them; and an arbiter controlling the crossbar and configured to: receive a plurality of access requests from the plurality of processing elements; compare memory access requests from two processing elements; and upon determining that the two processing elements are requesting access to a common data word in a common bank, permit the two processing elements to access the common data word.

In another aspect, there is disclosed an arbiter circuit comprising an input port configured to receive memory access requests; an output port configured to control a memory multiplexer; and logic configured to: receive a plurality of memory access requests; and service access requests according to rules; wherein the rules comprise: if two access requests are directed to a common data word in a common memory bank, service both access requests simultaneously.

In yet another aspect, there is disclosed A method performed on a computer comprising receiving two memory access requests; comparing the memory access requests; and servicing at least one of the memory access requests according to rules comprising: if both access requests are from processing elements and are directed to a common data word in a common memory bank, service both access requests simultaneously.

DETAILED DESCRIPTION OF EXAMPLE EMBODIMENTS

A vector processor, such as a digital signal processor (DSP) may operate in a SIMD mode, in which each of a plurality of processing elements (PEs) execute the same instruction on different data. Memory, including main memory, local (L1) memory, or cache, may be divided into a plurality of banks, and each bank may be able to perform one successful read and/or write per clock cycle. Thus, if more than one PE attempts to access the same bank on the same clock cycle, a "stall" state occurs: one or more PEs should wait a number of clock cycles before its data operation is successful. In some example embodiments, PEs will be granted priority of access based on an ordinal designation. For example, given four PEs, PEs may be granted access in increasing order or in decreasing order, or according to some other pattern.

The banked scheme works well when a series of contiguous items is read or written, since every PE can then access memory at the same time. It works less well when every PE has its own address offset into memory. This is called a gather operation for reads and a scatter for writes. In that case, several PEs may try to get at the same bank at once. In a typical vector memory system, such conflicts are handled by giving a separate cycle to each PE. This can cause a gather or scatter to take many cycles, slowing overall processing.

One aspect of this disclosure describes a way to speed up this situation. It is often the case that when PEs access the same bank, they are also accessing the same word within that bank. This may be because they need to read the exact same piece of data (perhaps as part of a table lookup), or because they need to read or write data that is not the same but still within one bank word. In either case, it is possible to do one memory access that satisfies several PEs, thus speeding up the overall access.

A worst-case scenario occurs when n PEs are operating in SIMD mode and each PE attempts to write to or read from the same bank on the same clock cycle. In that case, a stall of at least *n* clock cycles will occur for the PE with the lowest priority, during which time that PE sits idle rather than processing useful data.

Stalling can be ameliorated by a well-designed program. For example if there are at least as many memory banks as PEs, then a programmer can eliminate stalling by ensuring that on each clock cycle, each PE is accessing a different memory bank. Unfortunately, this solution is imperfect because there are many cases where memory cannot be so carefully segregated or planned.

To further ameliorate stalling, certain embodiments of the present disclosure provide a memory architecture that groups PEs attempting to read from the same memory bank, and if a plurality of PEs are attempting to read data from the same data word, that word is returned to each PE without additional stalling. Alternatively, the word may be returned with the useful portion shifted to a specific position (such as the most-significant or least-significant bits), with the remainder of the word zero-padded.

In one example of the present disclosure, if conflicting PEs are requesting data from the same word in a RAM bank, all are serviced in one cycle. In particular, the conflict logic is enhanced to check for matching indices. Accordingly, instead of stalling all lower-priority PEs, the RAM address of highest priority PE is sent to all others. If another PE has the same RAM address, it can read or write in the same cycle as the highest-priority PE. If not, a stall should be inserted.

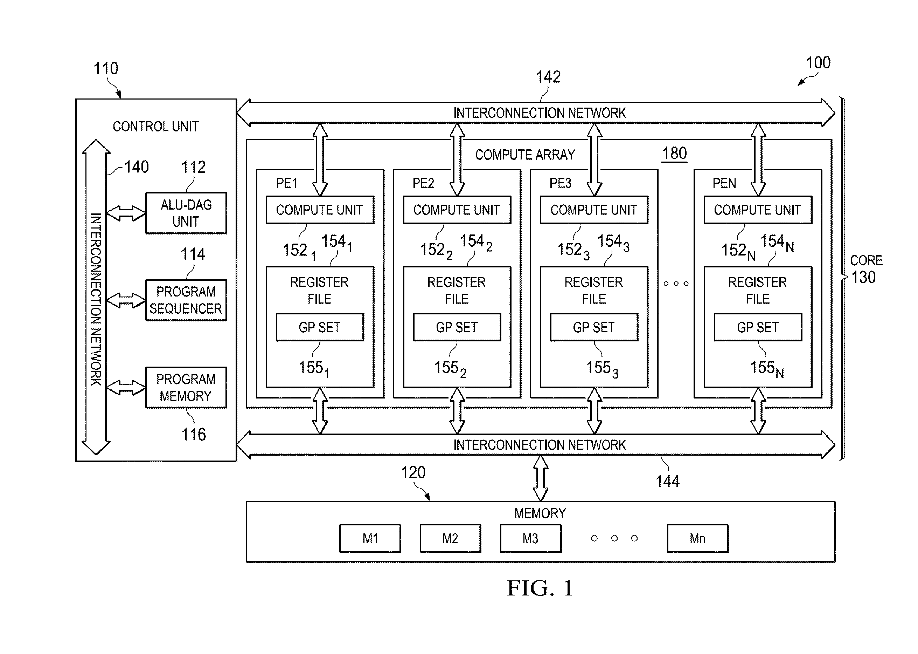

Turning now to the attached figures, FIG. 1 is a schematic block diagram of an example digital signal processor (DSP) 100 according to various aspects of the present disclosure. FIG. 1 has been simplified for the sake of clarity and to better understand the novel concepts of the present disclosure. Additional features may be added in DSP 100, and some of the features described below may be replaced or eliminated in other embodiments of DSP 100.

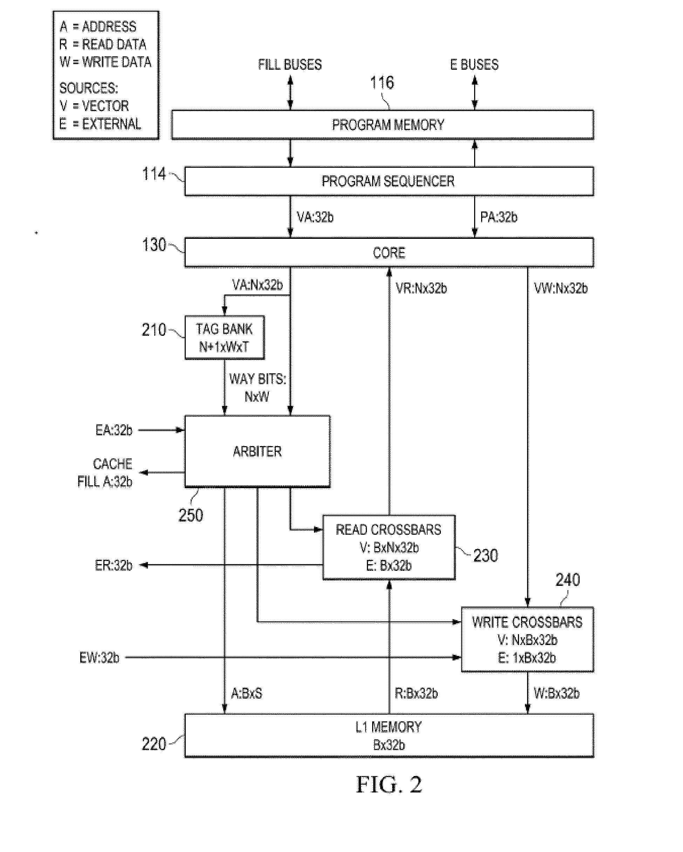

DSP 100 may include a control unit 110, a memory 120, and a compute array 180. In an example, control unit 110, compute array 180, and interconnection networks 140, 142, 144 constitute a core 130 that can perform computation and data processing functions of DSP 100. Some embodiments of DSP 100 include other components, such as a microcontroller for executing microcontroller instructions, a direct memory access (DMA) unit, and various interfaces to off-chip devices. Further, although memory 120 is shown here as a single logical block, those with skill in the art will recognize that memory 120 may include system main memory, various levels of on-chip cache, and/or other volatile or non-volatile memory technologies. In an example embodiment, a separately addressable L1 memory 220 (FIG. 2) or cache may be provided.

Control unit 110 facilitates program execution of DSP 100. Control unit 110 may include an arithmetic logic unit and data address generation (ALU-DAG) unit 112, a program sequencer 114, and a program memory 116. Control unit 110 may also include other components, such as an instruction cache, a timer, and an instruction register. ALU-DAG unit 112 supports general-purpose integer computations and supplies addresses for memory addresses. For example, ALU-DAG 112 provides memory addresses when data is transferred between memory 120 and registers (such as register files of core 130, described below). ALU-DAG unit 112 can supply addresses to data memory (for example, memory 120) and/or program memory 116. Program sequencer 114 provides instruction addresses to program memory 116 for instruction fetches. Program memory 116 stores programs that DSP 100 implements to process data (such as that stored in memory 120) and can also store process data. Programs include instruction sets having one or more instructions, and DSP 100 implements the programs by fetching the instructions, decoding the instructions, and executing the instructions. In an example, programs may include instruction sets for implementing various DSP algorithms, including algorithms relying on a predicate counter

Memory 120 stores information/data to be processed by DSP 100 (data memory), programs implemented by DSP 100 to process the information/data (program memory), or a combination thereof. In the depicted embodiment, memory 120 has a multi-banked interleaved memory structure, such that the memory 120 includes memory banks M1, M2, M3, ... Mn, where n is a total number of memory banks of memory 120. In an example, memory 120 is a random access memory, such as a static random-access memory (SRAM), dynamic RAM (DRAM), flash or other suitable memory technology. In an example, one or more memory banks M are a separate RAM. Alternatively, in various implementations, memory 120 is another suitable type of memory.

An interconnection network 140, an interconnection network 142, and an interconnection network 144 interconnect control unit 110, memory 120, and compute array 180, thereby providing communication pathways between control unit 110, memory 120, and compute array 180. Interconnection network 140, interconnection network 142, and interconnection network 144 may include a single bus, multiple buses, a crossbar network, a single-stage network, a multistage network, other type of interconnection network, or combination thereof. Control unit 110 issues instructions and data addresses to compute array 180 via interconnection network 142. Interconnection network 142 thus transfers addresses for instructions and data to various processing elements PE of compute array 180 via interconnection network 142. Interconnection network 144 transfers data and/or instructions from memory (such as memory 120, program memory 116, other memory, or combination thereof), such that contents of any register in DSP 100 can be transferred to any other register or to any memory location and memory 120 can provide data operands (values) to compute array 180.

In some embodiments, compute array 180 includes a plurality of processing elements PE1, PE2, PE3, ... PEN, where N is a total number of processing elements of compute array 180. In an example, core 110 may include four processing elements (PE1, PE2, PE3, and PE4). Processing elements PE perform numeric processing for DSP algorithms. Processing elements PE may operate independently, in parallel, or as a SIMD engine. In the present example, each processing element PE may be a vector processor. Alternatively, processing elements PE may be a combination of scalar processors and vector processors.

Processing elements PE each include a respective computation unit (CU) 152. In the depicted embodiment, computation units 152 may be identical, although the present disclosure contemplates embodiments where computation units 152 are not identical. The present disclosure further contemplates configurations where one or more processing elements PE do not include a computation unit 152. In the present example, computation units 152 each include an arithmetic logic unit (ALU), a multiplier-accumulator (MAC), a shifter, other computational unit, or combinations thereof. An ALU can perform arithmetic and logic operations, such as add, subtract, negate, increment, decrement, absolute value, AND, OR, EXCLUSIVE OR, NOT, divide primitive, other arithmetic operations, other logic operations, or combinations thereof. An example MAC can perform multiplication operations as well as multiply and accumulate operations, such as single-cycle multiply, multiply/add, multiply/subtract, other operations, or combinations thereof. A shifter can perform logical and arithmetic shifts, bit manipulations, normalization, denormalization, derive-exponent operations, other operations, or combinations thereof. The various arithmetic operations, logic operations, and other operations can be performed on both fixed-point and floating-point formats. In various embodiments, the ALU, MAC, and/or shifter include registers associated therewith.

Processing elements PE may also each include a respective register file 154. In the depicted embodiment, register files 154 may be identical, although the present disclosure contemplates embodiments where register files 154 are not identical. The present disclosure further contemplates configurations where one or more processing elements PE do not include a register file 154. Register files 154 include registers that transfer data between processing elements PE and data interconnection networks (such as interconnection network 144) and stores results. In the present example, register files 154 can include a respective general purpose register set 155 that include general purpose registers having widths dependent on design requirements of DSP 100, such as 32-bit general purposes registers, 40-bit general purpose registers, 64-bit general purpose registers, 128-bit general purposes registers, other width general purpose registers, or a combination thereof. For purposes of the following discussion, general-purpose registers 155 include 32-bit general-purpose registers.

DSP 100 can perform various parallel operations. For example, during a single cycle, processing elements PE may access an instruction (via interconnection network 142) and access N data operands from memory (via interconnection network 144) for synchronous processing. In SIMD mode, DSP 100 may process multiple data streams in parallel. For example, when in SIMD mode, DSP 100 in a single cycle may dispatch a single instruction to each or a plurality of processing elements PE via interconnection network 142; load N data sets from memory (memory 120, program memory 116, other memory, or combination thereof) via interconnection network 144, one data set for each processing element PE (in an example, each data set may include two data operands); execute the single instruction synchronously in processing elements PE; and store data results from the synchronous execution in memory 120.

FIG. 2 is a block diagram disclosing with more particularity memory operations according to one example embodiment of the present disclosure. In this embodiment, core 130 is communicatively coupled to L1 memory 220, which in some embodiments may be part of or the same as main memory 120, or may be an on-chip high-speed memory that operates at or near the speed of core 130. For purposes of this example embodiment, main memory 120 will be treated as relatively slower system memory, while L1 memory 220 will be treated as relatively faster L1 memory configured to operate as a cache wherein locations in L1 memory 220 are mapped to locations in main memory 120. In this embodiment, program memory 116 receives instructions from main memory 120 and provides them to sequencer 114, which provides SIMD instructions to each processing element PE of core 130. Processing elements PE within core 130 issue memory requests to L1 memory 220. In some embodiments, L1 memory 220 mirrors a region of main memory 120, and maintains a table of main memory addresses, so that core 130 can request data from L1 memory 220 according to the data's address in main memory 120. Data exchanges are encoded according to the following scheme, with data widths specified in terms of bits (e.g., 32b):

| Types | | |
|---|---|---|
| | A | Addres |
| | R | Read Da |
| | W | Write Da |
| Sources | | |
| | V | Vector |
| | E | Externa |

Further in this example, B represents a number of interleaved memory banks in L1 memory 220, and $N$ represents the number of processing elements PE in core 130.

Read crossbars 230 and write crossbars 240 are provided to interconnect core 130 to various memory banks M for reading and writing. An arbiter 250 is provided to prioritize access requests and to route requests to the appropriate banks. Tag logic is also provided to maintain for each item in L1 memory 220 an address or partial address of where the data came from in main memory 120.

Program memory 116 stores instructions for quick access. Although shown as a separate block here, in some embodiments, program memory 116 may be part of L1 memory 220, or may be a separate instruction cache. Routines needing deterministic performance may be loaded into program memory 116, while others may be held elsewhere, such as in main memory 120. In one example embodiment, where program memory 116 is physically a separate device from L1 memory 220 and main memory 120, separate buses may be maintained for instruction cache fills and for external reads and writes. In this case, the instruction cache includes an ordinary flush mechanism, known in the art, to maintain coherence. In this case, the lack of any direct data paths between program memory 116 and L1 memory 120 reduces the complexity of crossbars 230, 240 and decreases conflicts with data accesses, but may also decrease storage space available for deterministic routines.

Tag bank 210 holds the addresses of external accesses. Upon an access request from a processing element PE, tag bank 210 checks whether the requested address is in L1 memory 220 or in a cacheable region outside L1 memory 220. Tag bank 210 may contain $N + 1$ copies of the tags so that the N vector addresses and an external snoop address can be checked at once. For unit-stride vector accesses, only two tags need to be checked, the min and max ones, which may conserve power. In a $W$-way data cache, tag bank 210 determines which way is being accessed, and send appropriate data bits to arbiter 250.

In this example embodiment, cached data are held and stored in L1 memory 220. The size of a cache line may be fixed, for example at 32b, but the number of lines can be controlled by a register. Also in this embodiment, tags may be invalidated *en masse* for initialization, or when an external snoop address includes an instruction to do so. Upon a fill event, all tags in tag bank 210 are filled with the same new tag.

In an example single-core system, L1 memory 220 (operating as cache) may be write-back capable to reduce write bandwidth. In a multi-core system, L1 memory 220 may be write-through only to simplify maintaining coherency, because write-through needs only to invalidate a line rather than supply data from it. However, in some embodiments, a write-through also has a combining write buffer to reduce traffic on a higher-level cache, which is snooped. In some cases, frequently written structures like the stack may be stored in memory instead of L1 memory 220.

In an example embodiment, read crossbar 230 multiplexes read data from L1 memory 220 to processing elements PE under the control of arbiter 250. Read crossbar 230 may be configured to perform at least two transfers at once as needed: a $B \times N \times 32b$ select for a vector read, and a $B \times 32b$ for an external access.

Further, in an example embodiment, write crossbar 240 writes data from processing elements PE to L1 memory 220 under the control of arbiter 250. Write crossbar 240 may be configured to perform at least two transfers at once as needed: an $N \times B \times 32b$ select for a vector write, and a $B \times 32b$ external write.

In one embodiment, $B$ banks of $2^S \times 32$ -bit memory banks may be partitioned between data cache and system memory depending on a control register, up to the number of tags implemented. Example configurations include no data cache and maximum data cache.

In an example method, on a given clock cycle, sequencer 114 fetches instructions and generates starting addresses for the PEs of core 130. Sequencer 114 sends a base address to each PE, along with a size, and a mask of valid PEs. It may also send a second address for SIMD accesses.

The base address sent to valid PEs may be a standard data WORD size, for example 32 bits (4B), but may also be of other sizes. For example, in some example DSPs, addresses may be 6B (48-bit) increments. In some cases, an address range can be set to be in 48-bit mode if a flag bit is set for it. In this case, an access of 1, 2, or 4 byte data will only access the low 4 bytes of a 6 byte field and the other 2 are ignored. In a particular embodiment, 8-byte accesses are restricted in this mode, though in other embodiments they may be allowed. The base address can be translated to bytes as follows:

$$\text{byte\_addr} = (\text{in 48-bit region}) ? ((\text{addr}{<}31{:}2{>} << 2) + (\text{addr}{<}31{:}2{>} << 1) + \text{addr}{<}1{:}0{>}) : \text{addr}$$

In some example DSPs, the size can be 1, 2, 4, 6, or 8 bytes, and the 6B mode permits the code to save and restore 40-bit extended precision registers. For a 32-bit crossbar 230, 240, vector accesses that use 6 or 8 bytes take at least 2 cycles. Scalar accesses may be optimized to take 1 cycle if the size is 6 bytes.

As mentioned above, a mask of valid PEs may also be provided. For example, in the case where there are eight PEs numbered 1- 8, and PE1, PE2, and PE3 are not valid for the operation, a mask of 00011111 may be provided.

Processing elements PE receive a sequencer base address (PA:32b), size, and mask and generate a full set of addresses. For the unity-stride case, the PE address is the base plus the size times the PE index. For all others it is the base plus a local offset. The logic above for 48-bit regions is also applicable to the PE addresses.

If extra address logic is needed where addresses are calculated differently from those described above, unoccupied ports in cross bars 230, 240 may be used if available.

Processing elements PE may also do address range checking. For example, it may be assumed in this example that L1 memory 220 is a local memory such as L1 on-chip memory or cache. Each PE may test if an address is in L1 memory 220, or in a cacheable region outside of L1 memory 220, or is in a reserved space. Masked PEs are not checked. If an exception is found, it may be piped forward and compared to the ultimate mask to ensure that disabled PEs do not cause exceptions. For example, a routine might disable a PE if it tests an address offset and finds that it is out of bounds, without causing an exception.

L1 memory 220 may be built as a banded set of $B$ memory banks M interleaved on WORD-sized (for example, 32-bit) boundaries. If there are $N$ processing elements PE in core 130, $B$ may be chosen so that $B \geq 2N$. L1 memory 220 may be designed to be able to do the following accesses simultaneously:

a. Vector (V): A read or a write of $n$ items all at different addresses to/from processing elements PE.

b. External (E): An access from outside core 130. This can be a DMA to main memory 120, an access from a different processor, a data cache fill, or an instruction cache fill. These may have separate ports for higher performance, but are included here for simplicity.

L1 memory 220 may also include a data cache. In some embodiments, tags may be kept in a separate set of $N + 1$ tags in tag bank 210, permitting all addresses to be checked simultaneously.

In some example embodiments, 8-bit and 16-bit accesses are also supported, with data positioned within 32-bit words. For example, if the least significant bye of a register is to be written to address 0x3, the source-processing element PE shifts the data up by 3 bytes and presents the entire 32-bit word to write crossbar 240. 64-bit vector accesses by a single processing element PE may be supported in this embodiment by taking two cycles. 48-bit vector accesses may also be supported, and also take two cycles in this embodiment.

In this example embodiment, each memory bank M of L1 memory 220 can successfully complete one read and one write in each clock cycle. Arbiter 250 routes read requests through the appropriate lines of read crossbars 230, and routes write requests through the appropriate lines of write crossbars 240. If multiple processing elements PEs issues read or write requests to the same memory bank M of memory 120, arbiter 250 prioritizes requests according to a priority scheme, and where necessary stalls processing elements PE until the memory request is completed. For example, one method comprises taking the bank bits out of each address, decoding them into B bits, and performing a priority encode among the N decoded bits for each bank. The PE with the lowest index gets access first, and others stall.

Stalls may be avoided, however, when multiple processing elements PE are accessing the same word in the same bank. Specifically, logic can be implemented to stall a processing element PE only if the bank select bits of its address match the bank select bits of a lower-numbered PE, and if the bank index bits are different.

```
for bank i of 8
in_use[i] = 0
for PE j of 4
if address[j]<4:2> == i // Does this PE use this bank?
if in_use[i] // A lower PE is already using this bank
 if PE_address[j]<15:5> != bank_address[i] // conflict!
 stall<j> = 1 // Assert stall
else // This is the first PE to use this bank
 bank_address[i] = PE_address[j]<15:5> // Select address for this bank
 PE_read data[j] = bank_read data[i] //The read data crossbar
 in_use[i] = 1 // Mark for higher PEs
```

One example method of limiting stalls is for unity stride cases when the size is only 1 or 2 bytes. For the 1 byte case, up to 4 processing elements PE may try access the same memory bank M of L1 memory 220 on a single clock cycle. But those four access requests may all be directed to the same WORD in memory, so that in fact all could be satisfied at once if each receives the entire WORD and knows which portion of the WORD to use as data.

In this case, it may be preferable to enable all four processing elements PE rather than stalling any of them. According to one embodiment of the present disclosure, a single 32b word is delivered to the four processing elements PE, and they each select the appropriate byte from it according to methods known in the art such as shifting. Alternatively, a pre-processing circuit may shift the data so that a zero-padded word is delivered to each PE, or the data may be delivered byte-wise to the proper PEs. Similarly, for write requests, each processing element PE may supply a byte in the appropriate lane and a byte enable. The enables can be used to multiplex the bytes together so that the entire WORD can be written to L1 memory 220.

A second example method is drawn to vector scatter/gather operations. In this case, again, several processing elements PE may try to access a single WORD in L1 memory 220. To service two accesses at once, a second priority encode is done to find the second processing element PE, and its low bits are compared to the low bits of the highest-priority processing element PE. In other embodiments, additional processing elements PE could be accommodated.

Arbiter 250 may also check for external access requests, such as cache fills or cache flushes. In some embodiments, external requests are assigned higher priority than processing element PE requests, because processing elements PE have continual access to L1 memory 220. This would effectively permanently lock out external memory accesses until an expensive cache miss. Conflicts with external accesses may also be reduced by buffering several external cache burst accesses and doing them all at once. For example, a long DMA could take a cycle to read all memory banks M into a wide register in read crossbar 230, and then trickle them out. External ports may be provided with a "burst length" parameter to aid this operation.

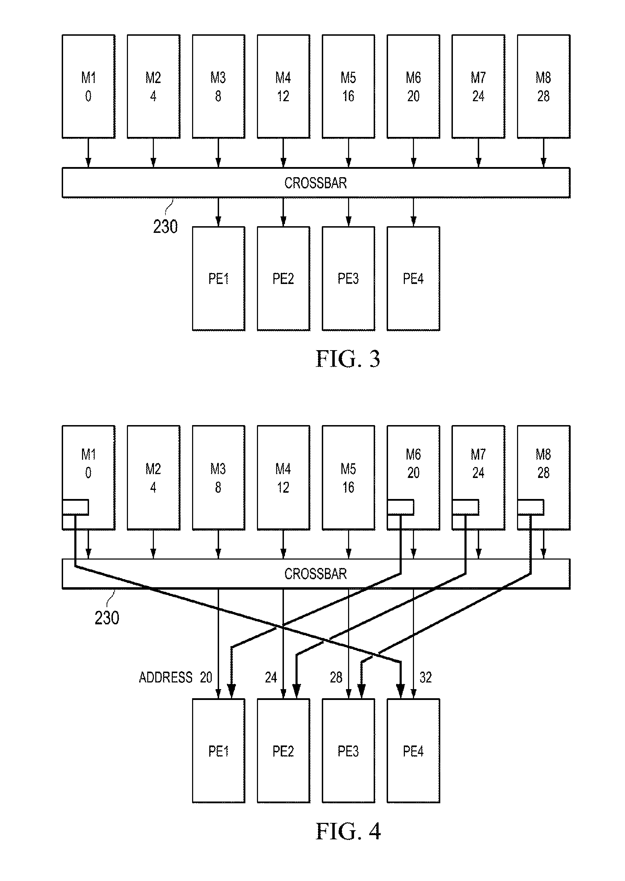

FIG. 3 is a simplified block diagram illustrating the effects of the present disclosure. In FIG. 3, core 130, including four processor elements PE1- PE4, connect to memory 120 via crossbar 230. Memory 120 includes eight memory banks M1 - M8. In this example embodiment, the stride is 4 bytes, so that M1 contains for example addresses 0 - 3 and 32 - 35 and so on, M2 contains addresses 4 - 7 and 36 - 39, M3 contains addresses 8 - 11 and 40 - 43, M4 contains addresses 12 - 15 and 44 - 47, M5 contains addresses 16 - 19 and 48 - 51, M6 contains addresses 20 - 23 and 52 - 55, M7 contains addresses 24 - 27 and 56 - 59, M8 contains addresses 28 - 31 and 60 - 63, and so on.

FIG. 4 is a block diagram of a best-case scenario for memory access. In FIG. 4, PE1 requests address 20, PE2 requests address 24, PE3 requests address 28, and PE4 requests address 32. In this case, no stalling occurs because each processing element PE has accessed a different memory bank M. This best-case scenario with no stalls is possible as long as the number of memory banks M is greater than or equal to the number of processing elements PE.

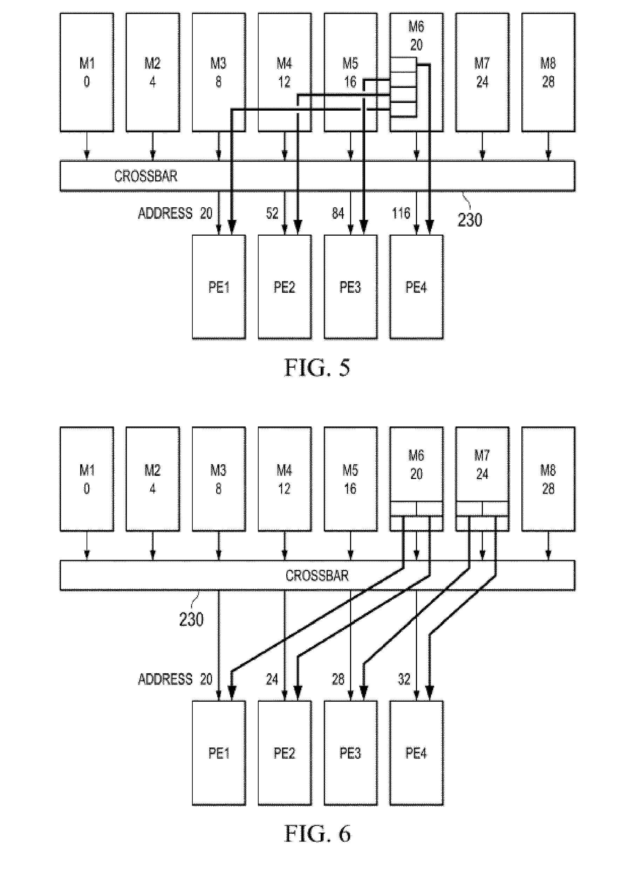

FIG. 5 is a block diagram of a worst-case scenario for memory access. In this example, PE1 requests address 20, PE2 requests address 52, PE3 requests address 84, and PE4 requests address 116. In this case, all of the addresses fall in memory bank M6. In this case, if the processor is designed so that the highest-numbered processing element PE get priority, then PE4 will execute without stalling. PE3 will be stalled for one cycle. PE 2 will be stalled for two cycles. And PE3 will be stalled for three cycles. The worst-case scenario scales linearly with the number of processing elements PE: namely, given *n* processing elements PE, the worst-case scenario is that the lowest-numbered processing element (PE1, for example) will stall for *n* - 1 cycles.

FIG. 6 is a block diagram of an intermediate memory access problem that is also a good candidate for memory remediation as disclosed in this specification. In this example, PE1 requests address 20 while PE2 requests address 22. Both of these addresses are in memory bank M6, so that traditionally, PE1 will be stalled for one cycle. PE3 requests address 24 while PE4 requests address 26. Again, both of these addresses are in the same memory bank, this time M7, so that traditionally PE3 will be stalled for one cycle.

But in this case, all four processing elements PE are accessing sequential memory locations. This may be the result, for example, of a vector operation requiring four successive memory locations. Because PE1 and PE2 are accessing the same word in memory bank M6, the full word can be returned to both PE1 and PE2

In the discussions of the embodiments above, the capacitors, clocks, DFFs, dividers, inductors, resistors, amplifiers, switches, digital core, transistors, and/or other components can readily be replaced, substituted, or otherwise modified in order to accommodate particular circuitry needs. Moreover, it should be noted that the use of complementary electronic devices, hardware, software, etc. offer an equally viable option for implementing the teachings of the present disclosure.

In one example embodiment, any number of electrical circuits of the FIGURES may be implemented on a board of an associated electronic device. The board can be a general circuit board that can hold various components of the internal electronic system of the electronic device and, further, provide connectors for other peripherals. More specifically, the board can provide the electrical connections by which the other components of the system can communicate electrically. Any suitable processors (inclusive of digital signal processors, microprocessors, supporting chipsets, etc.), memory elements, etc. can be suitably coupled to the board based on particular configuration needs, processing demands, computer designs, etc. Other components such as external storage, additional sensors, controllers for audio/video display, and peripheral devices may be attached to the board as plug-in cards, via cables, or integrated into the board itself.

In another example embodiment, the electrical circuits of the FIGURES may be implemented as stand-alone modules (e.g., a device with associated components and circuitry configured to perform a specific application or function) or implemented as plug-in modules into application specific hardware of electronic devices. Note that particular embodiments of the present disclosure may be readily included in a system on chip (SOC) package, either in part, or in whole. An SOC represents an IC that integrates components of a computer or other electronic system into a single chip. It may contain digital, analog, mixed-signal, and often radio frequency functions: all of which may be provided on a single chip substrate. Other embodiments may include a multi-chip-module (MCM), with a plurality of separate ICs located within a single electronic package and configured to interact closely with each other through the electronic package. In various other embodiments, the amplification functionalities may be implemented in one or more silicon cores in Application Specific Integrated Circuits (ASICs), Field Programmable Gate Arrays (FPGAs), and other semiconductor chips.

It is also imperative to note that all of the specifications, dimensions, and relationships outlined herein (e.g., the number of processors, logic operations, etc.) have only been offered for purposes of example and teaching only. Such information may be varied considerably without departing from the spirit of the present disclosure, or the scope of the appended claims. The specifications apply only to one non-limiting example and, accordingly, they should be construed as such. In the foregoing description, example embodiments have been described with reference to particular processor and/or component arrangements. Various modifications and changes may be made to such embodiments without departing from the scope of the appended claims. The description and drawings are, accordingly, to be regarded in an illustrative rather than in a restrictive sense.

Note that the activities discussed above with reference to the FIGURES are applicable to any integrated circuits that involve signal processing, particularly those that can execute specialized software programs, or algorithms, some of which may be associated with processing digitized real-time data. Certain embodiments can relate to multi-DSP signal processing, floating point processing, signal/control processing, fixed-function processing, microcontroller applications, etc.

In certain contexts, the features discussed herein can be applicable to medical systems, scientific instrumentation, wireless and wired communications, radar, industrial process control, audio and video equipment, current sensing, instrumentation (which can be highly precise), and other digital-processing-based systems.

Moreover, certain embodiments discussed above can be provisioned in digital signal processing technologies for medical imaging, patient monitoring, medical instrumentation, and home healthcare. This could include pulmonary monitors, accelerometers, heart rate monitors, pacemakers, etc. Other applications can involve automotive technologies for safety systems (e.g., stability control systems, driver assistance systems, braking systems, infotainment and interior applications of any kind). Furthermore, powertrain systems (for example, in hybrid and electric vehicles) can use high-precision data conversion products in battery monitoring, control systems, reporting controls, maintenance activities, etc.

In yet other example scenarios, the teachings of the present disclosure can be applicable in the industrial markets that include process control systems that help drive productivity, energy efficiency, and reliability. In consumer applications, the teachings of the signal processing circuits discussed above can be used for image processing, auto focus, and image stabilization (e.g., for digital still cameras, camcorders, etc.). Other consumer applications can include

**EP 2 725 497 A1**

audio and video processors for home theater systems, DVD recorders, and high-definition televisions. Yet other consumer applications can involve advanced touch screen controllers (e.g., for any type of portable media device). Hence, such technologies could readily part of smartphones, tablets, security systems, PCs, gaming technologies, virtual reality, simulation training, etc.

Note that with the numerous examples provided herein, interaction may be described in terms of two, three, four, or more electrical components. However, this has been done for purposes of clarity and example only. It should be appreciated that the system can be consolidated in any suitable manner. Along similar design alternatives, any of the illustrated components, modules, and elements of the FIGURES may be combined in various possible configurations, all of which are clearly within the broad scope of this Specification. In certain cases, it may be easier to describe one or more of the functionalities of a given set of flows by only referencing a limited number of electrical elements. It should be appreciated that the electrical circuits of the FIGURES and its teachings are readily scalable and can accommodate a large number of components, as well as more complicated/sophisticated arrangements and configurations. Accordingly, the examples provided should not limit the scope or inhibit the broad teachings of the electrical circuits as potentially applied to a myriad of other architectures.

Note that in this Specification, references to various features (e.g., elements, structures, modules, components, steps, operations, characteristics, etc.) included in "one embodiment", "example embodiment", "an embodiment", "another embodiment", "some embodiments", "various embodiments", "other embodiments", "alternative embodiment", and the like are intended to mean that any such features are included in one or more embodiments of the present disclosure, but may or may not necessarily be combined in the same embodiments.

Numerous other changes, substitutions, variations, alterations, and modifications may be ascertained to one skilled in the art and it is intended that the present disclosure encompass all such changes, substitutions, variations, alterations, and modifications as falling within the scope of the appended claims. In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph six (6) of 35 U.S.C. section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

OTHER NOTES, EXAMPLES, AND IMPLEMENTATIONS

Note that all optional features of the apparatus described above may also be implemented with respect to the method or process described herein and specifics in the examples may be used anywhere in one or more embodiments.
Any 'means for' disclosed above may include (but is not limited to) using any suitable component discussed herein, along with any suitable software, circuitry, hub, computer code, logic, algorithms, hardware, controller, interface, link, bus, communication pathway, etc. In a second example, the system includes memory that further comprises machine-readable instructions that when executed cause the system to perform any of the activities discussed above.

**Claims**

1. An arbiter circuit, comprising:

   an input port configured to receive memory access requests;
   an output port configured to control a memory multiplexer; and
   logic configured to:

      receive a plurality of memory access requests; and
      service access requests according to rules;

   wherein the rules comprise:

      if two access requests are directed to a common data word in a common memory bank, service both access requests simultaneously.

2. The arbiter circuit of claim 1, wherein the rules further comprise:

   if one access request is a write request to a memory bank and one access request is a read request from the memory bank, service both requests simultaneously.

9

**3.** The arbiter circuit of claim 1 or 2, wherein the rules further comprise:

if one access request is from an external device and one access request is from a local device, assign priority to the request from the external device.

**4.** The arbiter circuit of any preceding claim, wherein the rules further comprise:

upon receiving a plurality of access requests from a plurality of local devices, identify or assign an index for each device, and if more than one device is requesting access to a common data word of a common memory bank, service the request from the device with the lower index.

**5.** The arbiter of any preceding claim, wherein the rule to service both requests simultaneously comprises:

if the access requests are read requests, return in response to each access request the common data word.

**6.** A data processing circuit, comprising:

a plurality of processing elements;
a memory comprising a plurality of banks;
a crossbar communicatively coupled to the processing elements and to the memory; and
an arbiter circuit according to any of claims 1 to 5 arranged to control at least some of the operations of the crossbar, wherein the data processing circuit configured to:

receive a plurality of access requests from the plurality of processing elements;
compare memory access requests from two processing elements;
determine that the two processing elements are requesting access to a common data word in a common bank; and
permit the two processing elements to access the common data word.

**7.** The data processing circuit of claim 6, wherein the arbiter circuit is further configured to:

determine that more than two processing elements are requesting access to the common data word; and
permit all processing elements requesting access to access the common data word.

**8.** The data processing circuit of claim 6 or 7, wherein the access request is a read request, and wherein permitting the two processing elements to access the common data word comprises returning the common data word to the two processing elements.

**9.** The data processing circuit of claim 8, wherein the arbiter circuit is further configured to:

create a copy of the common data word for each processing element; and
shift a portion of the common data word to a preferred position in each copy.

**10.** The data processing circuit of any one of claims 6 to 9, wherein the access request is a write request, and wherein permitting the two processing elements to access the common data word comprises combining the write requests into a single data word and writing the common data word to the common memory bank.

**11.** The data processing circuit of any one of claims 6 to 10, wherein comparing the memory access requests comprises:

extracting a set of bits identifying a memory bank;
performing a priority encode between the extracted bits for the two processing elements; and
assigning to each processing element a resulting index.

**12.** The data processing circuit of claim 11, wherein the arbiter circuit is configured to:

detect that two processing elements are requesting access to a non-common data word in a common memory bank;
permit one processing element to access the common memory bank; and stall the other processing element.

**13.** The data processing circuit of claim 12, wherein the processing element with a lower index is permitted to access the common memory bank.

**14.** The data processing circuit of any one of claims 6 to 13, wherein the arbiter is further configured to:

receive an external access request; and
stall further access requests from processing elements until the external access request has been serviced.

**15.** A method performed on a computer, comprising:

receiving two memory access requests;
comparing the memory access requests; and
servicing at least one of the memory access requests according to rules comprising:

if both access requests are from processing elements and are directed to a common data word in a common memory bank, service both access requests simultaneously.

**16.** The method of claim 15, wherein the rules further comprise if both access requests are directed to a non-common data word in a common memory bank, select one access request for immediate service and select the other access request for stalling.

**17.** The method of claim 15 or 16, wherein the rules further comprise, if access requests are received from more than two processing elements requesting access to the common data word, service access requests simultaneously.

**18.** The method of claim 15, 16 or 17, wherein the access request is a read request and wherein servicing both access requests comprises returning the common data word to the two processing elements.

FIG. 1

EP 2 725 497 A1

FIG. 2

| M1 0 | M2 4 | M3 8 | M4 12 | M5 16 | M6 20 | M7 24 | M8 28 |
|---|---|---|---|---|---|---|---|

CROSSBAR

230

| PE1 | PE2 | PE3 | PE4 |
|---|---|---|---|

FIG. 3

| M1 0 | M2 4 | M3 8 | M4 12 | M5 16 | M6 20 | M7 24 | M8 28 |
|---|---|---|---|---|---|---|---|

CROSSBAR

230

ADDRESS 20    24    28    32

| PE1 | PE2 | PE3 | PE4 |
|---|---|---|---|

FIG. 4

FIG. 5

FIG. 6

EP 2 725 497 A1

Europäisches
Patentamt
European
Patent Office
Office européen
des brevets

**EUROPEAN SEARCH REPORT**

Application Number

EP 13 18 7866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/146025 A1 (OKINA [JP])<br>10 October 2002 (2002-10-10) | 15,18 | INV.<br>G06F13/16 |
| Y | * paragraph [0004] - paragraph [0034] *<br>* figure 1 * | 1,2,5-8,<br>10,16,17 | |
| A | | 3,4 | |
| | ----- | | |
| Y | CA 2 239 426 A1 (NEWBRIDGE NETWORKS CORP [CA]) 3 December 1999 (1999-12-03) | 1,2,5-8,<br>10,16,17 | |
| A | * page 3, line 18 - page 14, line 6 *<br>* figures 4,5,7,8 * | 9,11-14 | |
| | ----- | | |
| A | US 5 459 842 A (BEGUN [US] ET AL)<br>17 October 1995 (1995-10-17)<br>* column 2, line 53 - column 4, line 6 *<br>----- | 10 | |

| | |
|---|---|
| | TECHNICAL FIELDS<br>SEARCHED (IPC) |
| | G06F |

The present search report has been drawn up for all claims

| Place of search | Date of completion of the search | Examiner |
|---|---|---|
| The Hague | 27 February 2014 | McDonagh, Fintan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 13 18 7866

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2014

| Patent document cited in search report | | Publication date | Patent family member(s) | | Publication date |
|---|---|---|---|---|---|
| US 2002146025 | A1 | 10-10-2002 | JP 2002230977 A | | 16-08-2002 |
| | | | US 2002146025 A1 | | 10-10-2002 |
| CA 2239426 | A1 | 03-12-1999 | NONE | | |
| US 5459842 | A | 17-10-1995 | JP H06103151 A | | 15-04-1994 |
| | | | US 5459842 A | | 17-10-1995 |

**EP 2 725 497 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61717553 A